# EUROPEAN PATENT SPECIFICATION

(11) **EP 3 649 379 B1**
(45) Date of publication and mention of the grant of the patent: **16.03.2022**
(21) Application number: 18866972.5
(22) Date of filing: 18.09.2018
(51) Int. Cl.: F16H 57/04, F16H 1/28

(54) **LUBRICATION SYSTEM FOR A PLANETARY GEAR**
SCHMIERSYSTEM FÜR EIN PLANETENGETRIEBE
SYSTÈME DE LUBRIFICATION POUR ENGRENAGE PLANÉTAIRE

(30) Priority: 13.10.2017 SE 1751272
(43) Date of publication of application: 13.05.2020
(73) Proprietor: Scania CV AB, 151 87 Södertälje (SE)
(72) Inventor: FORSBERG, Jörgen, 647 35 Mariefred (SE); SETTERSJÖ, Håkan, 141 32 Huddinge (SE)
(74) Representative: Scania CV AB
(86) International application number: PCT/SE2018/050951
(87) International publication number: WO 2019/074420

(56) References cited:
- JP-A- S5 913 164
- JP-U- S60 112 747
- US-A1- 2006 054 414
- US-A1- 2009 247 348
- US-A1- 2012 028 748
- US-A1- 2014 031 162
- US-A1- 2016 290 480
- US-B2- 9 593 674

## Description

### TECHNICAL FIELD

The present invention relates to a lubrication system for a planetary gear, a powertrain comprising a lubrication system and a vehicle comprising a powertrain.

### BACKGROUND

A planetary gear comprises a sun gear, a ring gear and a number of planet gears supported by a planet gear carrier. The planetary gear may be used in a powertrain for a vehicle. The sun gear is rotationally fixedly arranged on an inlet shaft and the planet gear carrier is rotationally fixedly arranged on an outlet shaft coaxially arranged with the inlet shaft. The components of the planetary gear may be lubricated and cooled by a lubrication system supplying lubricant via a lubrication channel in one of the shafts to a lubrication passage in the planet gear carrier. During operation, the lubricant is forced radially outwardly through the lubrication passage by means of the rotation of the planet gear carrier. The lubrication passage delivers lubricant to the sun gear and to the planet gear bearings, which are arranged radially outside the sun gear. During certain operating conditions, the rotational speed of the planet gear carrier is relatively low. In these cases, there may be a risk that the speed is not high enough to provide enough lubricant all the way radially outwardly to the planet gear bearings which may cause the sun gear to get to much lubricant and the bearings to little lubricant. During other operating conditions, the rotational speed of the planet gear carrier is relatively high. In these cases, the lubricant is forced radially outwardly to the planet gear bearings with a significantly higher force, which may cause the sun gear to get to little lubricant and the bearings to much lubricant. Due to the variation of the rotational speed of the planet gear carrier a pumping effect may occur in the lubrication passage which may cause an imbalance of the intended lubricant distribution between the sun gear and the planet gear bearings. Improvements in the field of lubricating planetary gears are therefore desirable.

The document JPS60112747U discloses a lubrication system for a planetary gear, the planetary gear comprises a sun gear rotationally fixedly arranged on a first shaft, a number of planet gears rotably supported by planet gear bearings and a planet gear carrier rotationally fixedly arranged on a second shaft. The lubrication system comprises a lubrication passage adapted to direct lubricant from one of the shafts to the planet gear bearings

### SUMMARY

An object of the present invention is to address and at least alleviate the above-mentioned problem. A further object is to reduce the pumping effect in a lubrication passage. Another object is to ensure a required lubricant flow to a sun gear and to planet gear bearings during different operating condition.

In accordance with the present invention, there is provided a lubrication system for a planetary gear comprising a sun gear rotationally fixedly arranged on a first shaft, a number of planet gears rotatably supported by planet gear bearings and a planet gear carrier rotationally fixedly arranged on a second shaft. The lubrication system comprises a lubrication passage adapted to direct lubricant from one of the shafts to the planet gear bearings. The lubrication passage comprises a first passage part extending through the planet gear carrier from an inlet opening to a first outlet opening. The first passage part comprises a second outlet opening having a centre axis and adapted to direct lubricant through a third passage part, having a first cross-sectional area, to a first engagement area between the sun gear and the planet gears. The second outlet opening is located at a shorter first radial distance from a rotation axis of the sun gear than the first outlet opening. A flow restrictor is arranged in the first passage part. The flow restrictor delimits a gap, having a third cross-sectional area, between an interior surface of the first passage part and the restrictor and comprises at least one restriction having a lubrication inlet end, a lubrication outlet end and a second cross-sectional area. The lubrication inlet end is arranged at a second radial distance from the rotation axis, which is substantially the same as the first radial distance from the rotation axis to the centre axis. The position of the flow restrictor defines the proportions of lubricant to be directed from the first passage part to the bearings and the first engagement area so that a predetermined part of the lubricant leaving the first passage part is directed through the first outlet opening and a remaining part of the lubricant is directed through the second outlet opening. This may ensure a required balanced lubricant flow to the first engagement area and to the bearings during different operating conditions and may reduce the pumping effect in the lubrication passage.

According to an optional aspect of the invention, the lubrication inlet end is arranged at a second radial distance closer to the rotation axis than the first radial distance of the centre axis. Hereby lubricant is allowed to be dependent on the rotation speed of the planet gear carrier in a predetermined manner since the axial position can be selected such that relatively more lubricant will be supplied to the first engagement area than to the bearings at high rotational speeds to compensate for higher losses at the first engagement area than in the bearings. In addition, this may ensure a required balanced lubricant flow to the first engagement area and to the bearings during different operating conditions and may reduce the pumping effect in the lubrication passage. According to some embodiments, the second radial distance is in the range 0.80-0.95 times the first radial distance. This may improve the lubricant flow to the first engagement area and to the bearings during different operating conditions.

According to an optional aspect of the invention, the first cross-sectional area is greater than the second cross-sectional area. This may improve the lubricant flow to the first engagement area and to the bearings during different operating conditions. According to some embodiments, the first cross-sectional area is 2.25 times the second cross-sectional area.

According to an optional aspect of the invention, the third cross-sectional area is greater than the first cross-sectional area. This may improve the lubricant flow to the first engagement area and to the bearings during different operating conditions. According to some embodiments, the third cross-sectional area is 2 times the first cross-sectional area.

According to an optional aspect of the invention, the flow restrictor is bottle-shaped and comprises a body, a neck and a central longitudinal flow path. The restriction is arranged in the flow path. Hereby the flow restrictor may be achieved in a relatively simple manner. At some embodiments, the gap extends around an outer periphery of the neck. This may improve the lubricant flow to the first engagement area when the lubrication inlet end is arranged at a second radial distance closer to the rotation axis than the first radial distance of the centre axis.

According to an optional aspect of the invention, the flow restrictor is a stand-alone insert adapted to be inserted into the first passage part. Since the flow restrictor is a stand-alone insert shaped and configured to be received within an existing lubricant passage a particular planet gear carrier is not required in order receive improved lubricant distribution characteristics, on the contrary the insert can be installed in already existing planet gear carriers to improve their lubricant distribution characteristics. Further, the insert can easily be manually or automatically inserted and removed from a lubricant passage, which have been fitted with such flow restrictor. Another advantage is that the insert is simple to manufacture, and can be manufactured in large numbers for subsequent installation in any planet gear carrier.

In accordance with the present invention there is also provided a powertrain comprising a lubrication system according to what is mentioned above.

In accordance with the present invention there is also provided a vehicle comprising a powertrain according to what is mentioned above.

It is to be understood that both the foregoing general description and the following detailed description are exemplary and are intended to provide further explanation of the invention as claimed. Further features of, and advantages with, the present invention will become apparent when studying the appended claims and the following detailed description.

### BRIEF DESCRIPTION OF THE DRAWINGS

The invention will now be described in detail with reference to the accompanying drawings in which:
- Fig. 1: is a schematic view of a vehicle having a planetary gear.
- Fig. 2: is a schematic perspective view of the planetary gear.
- Fig. 3: is a cross-sectional view of the planetary gear along a line A-A at fig. 2.
- Fig. 4: is a locally enlarged view of the planetary gear shown in fig. 3
- Fig. 5: is a locally enlarged view of the planetary gear shown in fig. 3 showing a flow restrictor according to one embodiment.
- Fig. 6: is a locally enlarged view of the planetary gear shown in fig. 3 showing a flow restrictor according another embodiment.

### DETAILED DESCRIPTION

The invention will now be described with reference to the drawings in which some exemplary embodiment are shown. Well-known functions or constructions will not necessarily be described in detail for brevity and/or clarity.

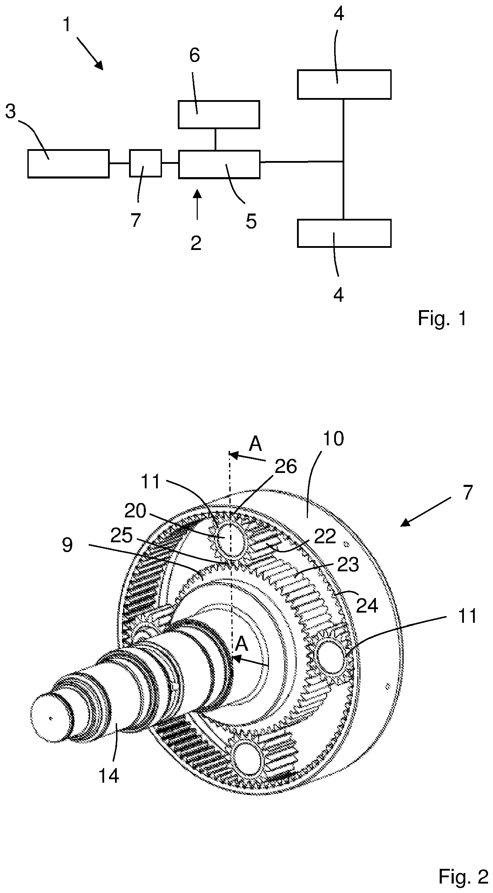

Fig. 1 shows a vehicle 1 having a powertrain 2 in which an internal combustion engine 3 is connected to traction wheels 4 via a gearbox (not shown). At some embodiments the vehicle 1 may be a hybrid vehicle comprising the internal combustion engine 3 and an electrical machine 5 adapted to be powered by at least one battery 6. The powertrain 2 comprises at least one planetary gear 7 adapted to control, for example, the torque transfer in the powertrain 2. The planetary gear 7 may be arranged at different positions in the powertrain 2 depending on the actual design of the powertrain 2.

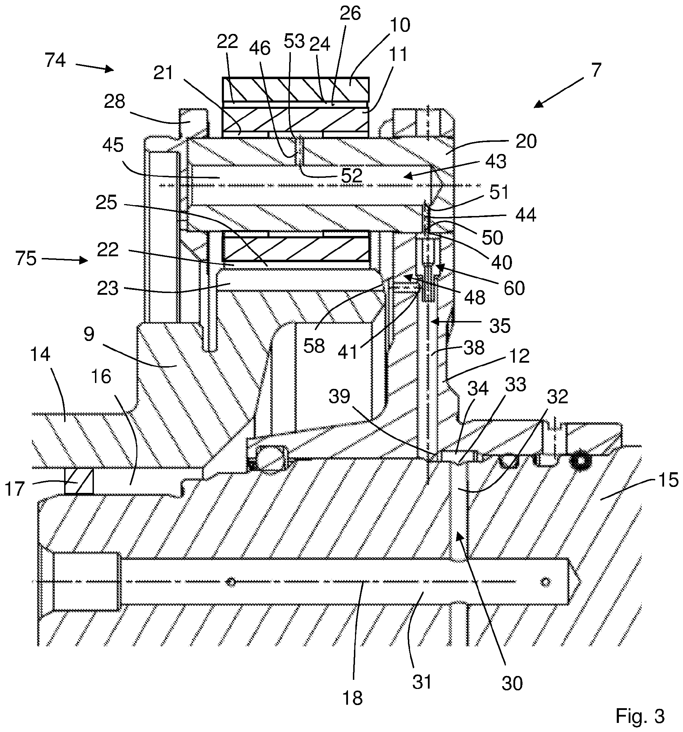

Figs. 2 and 3 shows that the planetary gear 7 comprises a sun gear 9, a ring gear 10 and a number of planet gears 11 which are rotatably mounted on a planet gear carrier 12 and adapted to intermesh with the sun gear 9 and ring gear 10. Further, the planet gears 11 are adapted to revolve around an exterior circumference of the sun gear 9. The sun gear 9 is rotationally fixedly arranged on a first rotatable shaft 14, which may be an inlet shaft, and the planet gear carrier 12 is rotationally fixedly arranged on a second rotatable shaft 15, which may be an outlet shaft. One end of the second shaft 15 extends into an inner space 16 at the end of the first shaft 14 and is supported by a bearing 17 arranged in the inner space 16. The first shaft 14 and the second shaft 15 are coaxially arranged with each other and rotatable about a common rotation axis 18.

The planet gear carrier 12 comprises hubs 20 adapted to support the respective planet gear 11. Each planet gear 11 is rotatably arranged on a hub 20 and rotatably supported by means of at least one planet gear bearing 21. Further, each planet gear 11 comprises planet gear teeth 22 adapted to be engaged with sun gear teeth 23 of the radially inner sun gear 9 and ring gear teeth 24 of the radially outer ring gear 10. The contact area between the planet gear teeth 22 and the sun gear teeth 23 defines a first engagement area 25. The contact area between the planet gear teeth 22 and the ring gear teeth 24 defines a second engagement area 26.

The planet gear carrier 12 comprises a locking portion 28 adapted to be engaged by a locking member (not shown). The locking member is rotationally fixedly arranged on the first shaft 14 and is movably arranged in an axial direction in relation to the first shaft 14 between a first operating condition and a second operating condition. In the first operating condition, the locking member is in engagement with the locking portion 28 and the rotational movement of the first shaft 14 is transmitted to the second shaft 15 via the planet gear carrier 12. In this operating condition, the second shaft 15 and the planet gear carrier 12 rotate at the same rotational speed as the first shaft 14 and the sun gear 9. In the second operating condition, the locking member is out of engagement with the locking portion 28 and the rotational movement of the first shaft 14 is transmitted to the second shaft 15 via the sun gear 9, the planet gears 11, the ring gear 10 and the planet gear carrier 12. In this operating condition, the ring gear 10 is provided with a torque and the second shaft 15 and the planet gear carrier 12 may achieve a lower rotational speed than the first shaft 14 and the sun gear 9. At some embodiments, the torque may be provided by the gearbox, which is adapted to control the torque. At some embodiments, when the planetary gear is used to achieve hybrid operation, the ring gear 10 is connected to a rotor in an electrical machine adapted to control the torque.

The planetary gear 7 comprises a lubrication system 30. The lubrication system 30 comprises an elongated axial lubrication channel 31 arranged in a central portion of the second shaft 15 and connected to a lubricant pump (not shown). At some embodiments, the lubrication channel 31 may be arranged in the first shaft 14. Further, the lubrication system 30 comprises at least one radial lubrication channel 32 adapted to direct lubricant from the axial lubrication channel 31 radially outwardly and out of the second shaft 15, or where appropriate the first shaft 14, to a lubrication passage 35 in the planet gear carrier 12 via an outlet opening 33 and an annular space 34. The lubrication passage 35 is adapted to direct lubricant from one of the shafts 14, 15 to the planet gear bearings 21. The outlet opening 33 and the annular space 34 are arranged in positions radially inwardly of the planet gear carrier 12.

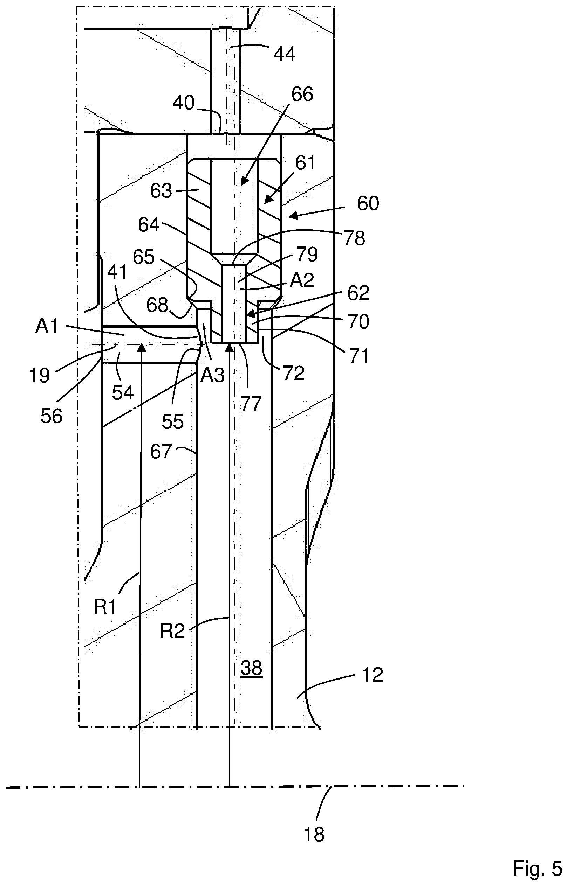

The lubrication passage 35 comprises a first passage part 38 extending through the planet gear carrier 12 and having a radial extension essentially corresponding to the radial extension of the planet gear carrier 12 between an inlet opening 39 arranged at an inner periphery of the planet gear carrier 12 and a first outlet opening 40 arranged at an outer periphery of the planet gear carrier 12 in the vicinity of the hub 20. Further the first passage part 38 has a second outlet opening 41 arranged in the sidewall of the first passage part 38 between the inlet opening 39 and the first outlet opening 40 in the axial direction of the first passage part 38 and having a centre axis 19 (fig. 5). At some embodiments a lubrication passage 35 is arranged between the axial lubrication channel 31 and each hub 20 i.e. each planet gear 11. The first passage part 38 may have any cross-sectional shape that suits the particular application. In a preferred embodiment, the cross-sectional shape is circular.

During operation, the rotational speed of the planet gear carrier 12 forces the lubricant in the first passage part 38 radially outwardly. The lubricant receives a velocity in an axial direction through the first passage part 38 ensuring that the lubricant leaves the planet gear carrier 12 through the first outlet opening 40 and the second outlet opening 41. The lubricant leaving the first outlet opening 40 flows substantially radially outwardly through a second passage part 43 of the lubrication passage 35. The second passage part 43 comprises a first channel 44 comprising a first inlet opening 50 and a first outlet opening 51, an inner space 45 of the hub 20 and at least one second channel 46 comprising a second inlet opening 52 and a second outlet opening 53. The first channel 44 is formed in the hub 20 and adapted to direct lubricant radially outwardly from the first passage part 38 to the inner space 45. The second channel 46 is formed in the hub 20 and adapted to direct lubricant from the inner space 45 to the planetary gear bearings 21. The planet gears 11 rotates with a low friction on the hub 20 by means of the planet gear bearings 21. The lubricant distributed by the lubrication passage 35 provides an effective cooling and lubrication of planet gear bearing 21.

The second outlet opening 41 is, with reference to figs. 3, 4 and 5, adapted to direct lubricant through a third passage part 48, having a first cross-sectional area A1, to the first engagement area 25 between the sun gear 9 and the planet gears 11. The centre axis 19 of the second outlet opening 41 is located at a shorter first radial distance R1 from a rotation axis 18 of the sun gear 9 than the first outlet opening 40. The lubricant leaving the second outlet opening 41 flows substantially perpendicular to the lubricant in the first passage part 38 and substantially in the axial direction of the planet gear carrier 12 through the third passage part 48. The third passage part 48 comprises a third channel 54 comprising a third inlet opening 55 and a third outlet opening 56 at a periphery portion of the sun gear 9. The periphery portion of the sun gear 9 constitutes the first engagement area 25, i.e. the contact area between the planet gear teeth 22 and the sun gear teeth 23.

The third passage part 48 is formed in the planet gear carrier 12 and adapted to direct lubricant from the first passage part 38 towards an end surface 58 of the sun gear teeth 23, or more precisely into spaces between the sun gear teeth 23. Further, the third channel 54 has the first cross-sectional area A1 and may be arranged with its centre axis 19 in parallel with the common rotation axis 18 and at the first radial distance R1 from the rotation axis 18. When the planet gear 11 shown in fig. 3 rotates, lubricant is distributed by the rotation from the first engagement area 25 to the second engagement area 26 i.e. to the contact area between the planet gear teeth 22 and the ring gear teeth 24. The lubricant distributed by the lubrication passage 35 therefore provides an effective cooling and lubrication of the sun gear teeth 23, the planet gear teeth 22 and the ring gear teeth 24.

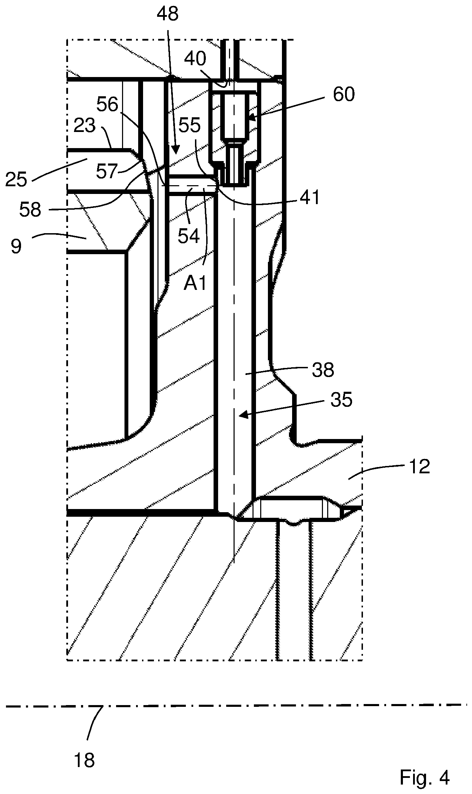

At some embodiments, the sun gear teeth 23 may comprise, as best shown in fig. 4, a zone with at least one lubrication-guiding surface 57 adapted to direct lubricant from the third passage part 48 along the sun gear teeth 23. The lubrication guiding surface 57 forming an angle less than 90 degrees in relation to the rotation axes 18 of the sun gear 9. At some embodiment, the angle may be less than 45 degrees. At a preferred embodiment, the angle may be 40 degrees. A lubrication-guiding surface 57 may be formed at the end of each sun gear tooth 23 and adapted to direct the lubricant from the third passage part 48 along the teeth 23 in their axial direction. The lubricant receives a velocity in the axial direction along the guiding surface 57 ensuring that the lubricant arrives at the correct location and is used for lubricating and cooling the first engagement area 25 and, by the rotation of the planet gear 11, the second engagement area 26 (fig 3).

With reference to fig. 3, the first passage part 38 is adapted to supply lubricant to a radially outer region 74 of the planetary gear 7 i.e. to the bearings 21 via the first outlet opening 40 and to supply lubricant to a radially inner region 75 of the planetary gear 7, i.e. to the first engagement area 25 via the second outlet opening 41. During operation the lubricant is forced radially outwardly through the first passage part 38 by means of the lubricant pump and the rotational speed of the rotating planet gear carrier 12. During certain operating conditions, the rotational speed of the planet gear carrier 12 is relatively low. In these cases, there may be a risk that the speed is not high enough to provide enough lubricant all the way radially outwardly to the bearings 21 which may cause the first engagement area 25 to get to much lubricant and the bearings 21 to little lubricant. During other operating conditions, the rotational speed of the planet gear carrier 12 is relatively high. In these cases the lubricant is forced radially outwardly to the bearings 21 with a significantly higher force which may cause the first engagement area 25 to get to little lubricant and the bearings 21 to much lubricant. Due to the variation of the rotational speed of the planet gear carrier 12 a pumping effect may occur in the lubrication passage 35 which may cause an imbalance of the intended lubricant distribution between the first engagement area 25 and the bearings 21.

To solve or at least alleviate this problem a flow restrictor 60 may be arranged in the first passage part 38. The axial position of the flow restrictor 60 defines the proportions of lubricant to be directed from the first passage part 38 to the bearings 21 and the first engagement area 25 so that a predetermined part of the lubricant leaving the first passage part 38 is directed through the first outlet opening 40 and a remaining part of the lubricant is directed through the second outlet opening 41, substantially independent of the rotation speed of the planet gear carrier 12. At some embodiments the axial position of the flow restrictor 60 may be such that the lubricant is allowed to be dependent on the rotation speed of the planet gear carrier in a predetermined manner, for example, the axial position can be selected such that relatively more lubricant will be supplied to the first engagement area 25 than to the bearings 21 at high rotational speeds to compensate for higher lubricant losses at the first engagement area 25 than in the bearings 21.

The flow restrictor 60 may be adapted to be inserted into the first passage part 38 and thus, the first passage part 38 may be adapted to receive the flow restrictor 60. The flow restrictor 60 may be a stand-alone insert adapted to be inserted into the first passage part 38. The flow restrictor 60 can be manually or automatically inserted and removed, as appropriate, from passages 38, which have been fitted with such flow restrictor 60. Further, the flow restrictor 60 may be manufactured of any suitable material, including metals, plastic, composite materials or other durable materials.

The flow restrictor 60 may, which can be seen in fig 5, be bottle-shaped and may comprise a body 61, a neck 62 and a central longitudinal flow path 66 which serves as a lubricant inlet passage to the first channel 44. The body 61, the neck 62 and the flow path 66 may have any cross-sectional shape that suits the particular application. In a preferred embodiment, the cross-sectional shapes are circular. The body 61 includes an annular wall 63 having an exterior surface 64. The exterior surface 64 may include at least one exterior shoulder 65. An interior surface 67 of the first passage part 38 may include at least one interior shoulder 68 disposed at a predetermined location between the first outlet opening 40 and the second outlet opening 41. By disposing the interior shoulder 68 at a predetermined location, insertion of the flow restrictor 60 into the first passage part 38 can be performed easily by pushing the flow restrictor 60 so that its exterior shoulder 65 is brought into contact with the interior shoulder 68. Further, when brought into contact with each other the shoulders 65,68 prevent the flow restrictor 60 from sliding axially within the first passage part 38 towards the inner periphery of the planet gear carrier 12. At some embodiments the flow restrictor 60 may be held in position by a press fit and may have a width of the body 61 which at least slightly exceeds the width of the first passage part 38 so that when the flow restrictor 60 is inserted within the first passage part 38 it will remain in place and the pressure of the lubricant will not cause the flow restrictor 60 to be forced out of the first passage part 38. At some embodiments, the flow restrictor 60 may be held in position by the hub 20, which is arranged to extend over the mouth of the first passage part 38.

The neck 62 includes an annular wall 70 having an exterior surface 71, which together with the interior surface 67 of the first passage 38 is adapted to delimit the radial direction of a gap 72. The gap 72 extends around an outer periphery of the neck 62 and is open towards the radially inner periphery of the planet gear carrier 12 and closed by a bottom surface of the body 61 towards the radially outer periphery of the planet gear carrier 12. The axial extent of the gap 72 may be determined by the length of the neck 62. Further, the gap 72 has a third cross-sectional area A3.

The flow path 66 comprises least one restriction 79. The restriction 79 has a lubrication inlet end 77, a lubrication outlet end 78 and a second cross-sectional area A2, which is smaller than the cross-sectional area of the rest of the flow path 66. The restriction 79 may be formed in any suitable manner, such as by an inwardly tapering portion of the flow path 66. At some embodiments, at least one restrictor insert (not shown) may be installed in the flow path 66 to decrease the cross-sectional area of the flow path 66 to constitute the restriction 79. At some embodiments, at least a part of the restriction 79 may extend through the neck 62 in its axial direction. At other embodiments, the entire length of the flow path 66 may be shaped as a restriction.

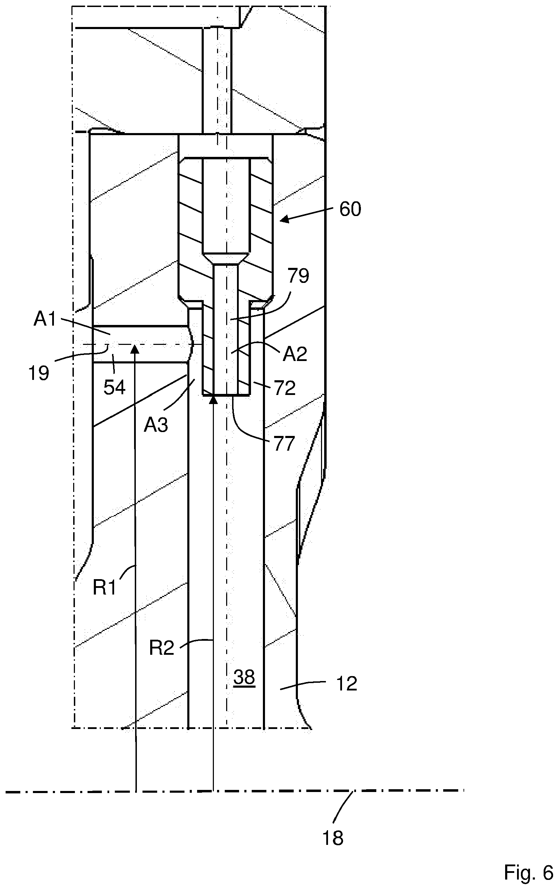

Further, the restriction 79 may be arranged with, which can be seen in figs. 5 and 6, the lubrication inlet end 77 at a second radial distance R2 from the rotation axis 18. At some embodiments the lubrication inlet end 77 may, which can be seen in fig.5, be arranged at a second radial distance R2 from the rotation axis 18 which is substantially the same as the first radial distance R1 from the rotation axis 18 to the centre axis 19 i.e. R1=R2. At other embodiments the lubrication inlet end 77 may, which can be seen in fig. 6, be arranged at a second radial distance R2 closer to the rotation axis 18 than the first radial distance R1 of the centre axis 19 i.e. R1>R2. At some embodiments, the second radial distance R2 may be in the range 0.80-0.95 times the first radial distance R1,

During operation, the rotational movement of the planet gear carrier 12 forces the lubricant in the first passage part 38 radially outwardly. The lubrication flow receives a velocity in an axial direction through the first passage part 38 ensuring that the lubricant flow leaves the planet gear carrier 12 through the third passage part 48 and the restriction 79. The axial position of the flow restrictor 60, the size of the first cross-sectional area A1, the size of the second cross sectional area A2 and the size of the third cross-sectional area A3 may have an influence on the flow of lubricant in the lubrication system. At some embodiments the first cross-sectional area A1 may be greater than the second cross-sectional area i.e. A1>A2. At an alternative embodiment A1=2.25 A2. Further, at some embodiments, the third cross-sectional area A3 may be greater than the first cross-sectional area A1 i.e. A3>A1. At an alternative embodiment A3>2A1. Further, at some embodiments, the length of the third passage part 48 and the size of the first cross-sectional area A1 on one hand and the length of the restriction 79 and the size of the second cross-sectional area A2 on the other hand may be chosen such that and the pressure drop in the third passage part 48 may be 1/3 of the pressure drop in the restriction 79.

The present invention is not limited to the embodiments describe above, but relates to and comprises all embodiments within the scope of protection of the attached independent claims. The vehicle 1 may for example be a truck, a bus, a passenger car, any commercial vehicle or any constructional vehicle or the like.

As used herein, the term "comprising" or "comprises" does not exclude other features, elements, steps, components, functions or groups thereof. Further, the indefinite article "a" or "an" does not exclude a plurality.

## Claims

1. A lubrication system for a planetary gear (7), the planetary gear comprises a sun gear (9) rotationally fixedly arranged on a first shaft (14), a number of planet gears (11) rotatably supported by planet gear bearings (21) and a planet gear carrier (12) rotationally fixedly arranged on a second shaft (15), wherein the lubrication system comprises a lubrication passage (35) adapted to direct lubricant from one of the shafts (14,15) to the planet gear bearings (21), the lubrication passage (35) comprises a first passage part (38) extending through the planet gear carrier (12) from an inlet opening (39) to a first outlet opening (40), the first passage part (38) comprises a second outlet opening (41) having a centre axis (19) and adapted to direct lubricant through a third passage part (48) having a first cross-sectional area (A1), to a first engagement area (25) between the sun gear (9) and the planet gears (11), wherein the second outlet opening (41) is located at a shorter first radial distance (R1) from a rotation axis (18) of the sun gear (9) than the first outlet opening (40), **characterized in that** a flow restrictor (60) is arranged in the first passage part (38), the flow restrictor (60) delimits a gap (72) having a third cross-sectional area (A3), between an interior surface (67) of the first passage part (38) and the restrictor (60), the flow restrictor (60) comprises at least one restriction (79) having a lubrication inlet end (77), a lubrication outlet end (78) and a second cross-sectional area (A2), the lubrication inlet end (77) is arranged at a second radial distance (R2) from the rotation axis (18), which is substantially the same as the first radial distance (R1) from the rotation axis (18) to the centre axis (19) or arranged at a second radial distance (R2) closer to the rotation axis (18) than the first radial distance (R1) of the centre axis (19).

2. A lubrication system according to claim 1, **characterized in that** the second radial distance (R2) is in the range 0.80-0.95 times the first radial distance (R1).

3. A lubrication system according to claim 1, **characterized in that** the first cross-sectional area (A1) is greater than the second cross-sectional area (A2).

4. A lubrication system according to claim 3, **characterized in that** the first cross-sectional
area (A1)equals 2.25 times the second cross-sectional area (A2).

5. A lubrication system according to claim 1, **characterized in that** the third cross-sectional area (A3) is greater than the first cross-sectional area (A1).

6. A lubrication system according to claim 5, **characterized in that** the third cross-sectional
area (A3)is greater than 2 times the first cross-sectional area (A1).

7. A lubrication system according to any one of claims 1-6, **characterized in that** the flow restrictor (60) is bottle-shaped and comprises a body (61), a neck (62) and a central longitudinal flow path (66) and **in that** the restriction (79) is arranged in the flow path (66).

8. A lubrication system according to any one of claims 1-7, **characterized in that** the gap (72) extends around an outer periphery of the neck (62).

9. A lubrication system according to any one of claims 1-8, **characterized in that** the flow restrictor (60) is a stand-alone insert adapted to be inserted into the first passage part (38).

10. A powertrain (2) comprising a lubrication system according to any one of claims 1-9.

11. A vehicle comprising a powertrain (2) according to claim 10.

## Patentansprüche

1. Schmiersystem für ein Planetengetriebe (7), wobei das Planetengetriebe ein Sonnenrad (9), das drehbar fest auf einer ersten Welle (14) angeordnet ist, eine Anzahl von Planetenrädern (11), die durch Planetenradlager (21) drehbar gelagert sind, und einen Planetenradträger (12), der drehbar fest auf einer zweiten Welle (15) angeordnet ist, umfasst, wobei das Schmiersystem einen Schmierkanal (35) umfasst, der geeignet ist, Schmiermittel von einer der Wellen (14, 15) zu den Planetenradlagern (21) zu leiten, wobei der Schmierkanal (35) einen ersten Kanalteil (38) umfasst, der sich durch den Planetenradträger (12) von einer Einlassöffnung (39) zu einer ersten Auslassöffnung (40) erstreckt, wobei der erste Kanalteil (38) eine zweite Auslassöffnung (41) umfasst, die eine Mittelachse (19) aufweist und geeignet ist, um Schmiermittel durch einen dritten Kanalteil (48), der eine erste Querschnittsfläche (A1) aufweist, zu einem ersten Eingriffsbereich (25) zwischen dem Sonnenrad (9) und den Planetenrädern (11) zu leiten, wobei die zweite Auslassöffnung (41) in einem kürzeren ersten radialen Abstand (R1) von einer Drehachse (18) des Sonnenrads (9) angeordnet ist als die erste Auslassöffnung (40), **dadurch gekennzeichnet, dass** eine Durchflussdrossel (60) in dem ersten Kanalteil (38) angeordnet ist, wobei die Durchflussdrossel (60) einen Spalt (72) mit einer dritten Querschnittsfläche (A3) zwischen einer Innenfläche (67) des ersten Kanalteils (38) und der Drossel (60) begrenzt, wobei die Durchflussdrossel (60) mindestens eine Drossel (79) mit einem Schmiermitteleinlassende (77), einem Schmiermittelauslassende (78) und einer zweiten Querschnittsfläche (A2) umfasst, wobei das Schmiermitteleinlassende (77) in einem zweiten radialen Abstand (R2) von der Drehachse (18) angeordnet ist, der im Wesentlichen derselbe ist wie der erste radiale Abstand (R1) von der Drehachse (18) zur Mittelachse (19) oder in einem zweiten radialen Abstand (R2) angeordnet ist, der näher an der Drehachse (18) liegt als der erste radiale Abstand (R1) der Mittelachse (19).

2. Schmiersystem nach Anspruch 1, **dadurch gekennzeichnet, dass** der zweite radiale Abstand (R2) im Bereich des 0,80-0,95-fachen des ersten radialen Abstands (R1) liegt.

3. Schmiersystem nach Anspruch 1, **dadurch gekennzeichnet, dass** die erste Querschnittsfläche (A1) größer ist als die zweite Querschnittsfläche (A2).

4. Schmiersystem nach Anspruch 3, **dadurch gekennzeichnet, dass** die erste Querschnittsfläche (A1) das 2,25-fache der zweiten Querschnittsfläche (A2) beträgt.

5. Schmiersystem nach Anspruch 1, **dadurch gekennzeichnet, dass** die dritte Querschnittsfläche (A3) größer ist als die erste Querschnittsfläche (A1).

6. Schmiersystem nach Anspruch 5, **dadurch gekennzeichnet, dass** die dritte Querschnittsfläche (A3) größer als das Zweifache der ersten Querschnittsfläche (A1) ist.

7. Schmiersystem nach einem der Ansprüche 1-6, **dadurch gekennzeichnet, dass** die Durchflussdrossel (60) flaschenförmig ist und einen Körper (61), einen Hals (62) und einen zentralen Längsdurchflussweg (66) umfasst und dass die Drossel (79) im Durchflussweg (66) angeordnet ist.

8. Schmiersystem nach einem der Ansprüche 1-7, **dadurch gekennzeichnet, dass** sich der Spalt (72) um einen Außenumfang des Halses (62) herum erstreckt.

9. Schmiersystem nach einem der Ansprüche 1-8, **dadurch gekennzeichnet, dass** die Durchflussdrossel (60) ein eigenständiger Einsatz ist, der geeignet ist, in den ersten Kanalteil (38) eingesetzt zu werden.

10. Antriebsstrang (2) mit einem Schmiersystem nach einem der Ansprüche 1-9.

11. Fahrzeug mit einem Antriebsstrang (2) nach Anspruch 10.

## Revendications

1. Système de lubrification pour un engrenage planétaire (7), l'engrenage planétaire comprend un engrenage solaire (9) agencée de manière fixe en rotation sur un premier arbre (14), un certain nombre d'engrenages planétaires (11) supportés de manière rotative par des paliers d'engrenage planétaire (21) et un support d'engrenage planétaire (12) disposé de manière fixe en rotation sur un second arbre (15), dans lequel le système de lubrification comprend un passage de lubrification (35) adapté pour diriger le lubrifiant depuis l'un des arbres (14, 15) vers les paliers d'engrenages planétaires (21), le passage de lubrification (35) comprend une première partie de passage (38) s'étendant à travers le support d'engrenages planétaires (12) depuis une ouverture d'entrée (39) vers une première ouverture de sortie (40), la première partie de passage (38) comprend une deuxième ouverture de sortie (41) ayant un axe central (19) et adaptée pour diriger le lubrifiant à travers une troisième partie de passage (48) ayant une première zone de section transversale (A1), vers une première zone d'engagement (25) entre l'engrenage planétaire (9) et les engrenages satellites (11), dans laquelle la deuxième ouverture de sortie (41) est située à une première distance radiale (R1) plus courte d'un axe de rotation (18) de l'engrenage planétaire (9) que la première ouverture de sortie (40), **caractérisé en ce qu'**un limiteur de débit (60) est disposé dans la première partie de passage (38), le limiteur de débit (60) délimite un espace (72) ayant une troisième aire de section transversale (A3), entre une surface intérieure (67) de la première partie de passage (38) et le limiteur (60), le limiteur de débit (60) comprend au moins une restriction (79) ayant une extrémité d'entrée de lubrification (77), une extrémité de sortie de lubrification (78) et une deuxième aire de section transversale (A2), l'extrémité d'entrée de lubrification (77) est disposée à une seconde distance radiale (R2) de l'axe de rotation (18), qui est sensiblement la même que la première distance radiale (R1) de l'axe de rotation (18) à l'axe central (19) ou disposée à une seconde distance radiale (R2) plus proche de l'axe de rotation (18) que la première distance radiale (R1) de l'axe central (19).

2. Système de lubrification selon la revendication 1, **caractérisé en ce que** la deuxième distance radiale (R2) est dans la plage de 0,80 à 0,95 fois la première distance radiale (R1).

3. Système de lubrification selon la revendication 1, **caractérisé en ce que** la première surface de section transversale (A1) est supérieure à la deuxième surface de section transversale (A2).

4. Système de lubrification selon la revendication 3, **caractérisé en ce que** la première surface de section transversale (Al) est égale à 2,25 fois la deuxième surface de section transversale (A2) .

5. Système de lubrification selon la revendication 1, **caractérisé en ce que** la troisième surface de section transversale (A3) est plus grande que la première surface de section transversale (A1).

6. Système de lubrification selon la revendication 5, **caractérisé en ce que** la troisième surface de section transversale (A3) est deux fois plus grande que la deuxième surface de section transversale (A1).

7. Système de lubrification selon l'une quelconque des revendications 1 à 6, **caractérisé en ce que** le limiteur de flux (60) est en forme de bouteille et comprend un corps (61), un col (62) et un trajet de flux longitudinal central (66) et **en ce que** le limiteur (79) est agencé dans le trajet de flux (66).

8. Système de lubrification selon l'une quelconque des revendications 1 à 7, **caractérisé en ce que** l'espace (72) s'étend autour d'une périphérie extérieure du col (62).

9. Système de lubrification selon l'une quelconque des revendications 1 à 8, **caractérisé en ce que** le limiteur de débit (60) est un insert autonome adapté pour être inséré dans la première partie de passage (38).

10. Groupe motopropulseur (2) comprenant un système de lubrification selon l'une quelconque des revendications 1 à 9.

11. Véhicule comprenant un groupe motopropulseur (2) selon la revendication 10.
